# EUROPEAN PATENT APPLICATION

(11) **EP 4 575 902 A1**
(43) Date of publication of application: **25.06.2025**
(21) Application number: 24219371.2
(22) Date of filing: 12.12.2024
(51) Int. Cl.: G06N 3/0495, G06F 7/544, G06F 7/483

(54) **SYSTEMS AND METHODS FOR OPTIMIZING COMPUTATIONAL EFFICIENCY AND PERFORMANCE OF MACHINE LEARNING (ML) MODELS**

(30) Priority: 20.12.2023 IN 202321087294
(71) Applicant: Tata Consultancy Services Limited, Maharashtra (IN)
(72) Inventor: SIVAKUMAR, NARENDRAN, London, SW1X 7HS (GB); VISWANATHAN, SANKARANARAYANAN, 600113 Chennai, Tamil Nadu (IN); KANNAN, RADHIKA, 600113 Chennai, Tamil Nadu (IN); RAMASAMY VENKADA, SUBRAMANIAN, 560066 Bangalore, Karnataka (IN)
(74) Representative: Goddar, Heinz J.

(57) **Abstract**

Traditional machine learning operations utilize high-precision numerical formats that lead to computational overhead and memory usage. Hence, it is imperative that precision of these computations needs to be reduced without compromising accuracy of machine learning (ML) models. Present disclosure provides systems for optimizing computational efficiency and performance of machine learning (ML) models. ML model consisting of model states in an original precision is fed as input, which are analyzed to determine (i) how to best divide model states into smaller chunks for efficient parallel processing, and (ii) an optimal bit-length for offloading of model states to a target precision and obtain offloaded data. The offloaded data is transferred to computing node which performs broadcast operations to obtain result(s). The results are integrated into original precision based on a mapping of subset of partitioned model states to the offloaded data to obtain a validated integrated result.

## Description

### CROSS-REFERENCE TO RELATED APPLICATIONS AND PRIORITY

The present application claims priority to Indian application no. 202321087294, filed on December 20, 2023.

### TECHNICAL FIELD

The disclosure herein generally relates to computational methods in machine learning (ML models), and, more particularly, to systems and methods for optimizing computational efficiency and performance of machine learning (ML) models.

### BACKGROUND

Conventionally, graphics processing units (GPUs) have used computational units, such as fixed functions to process data. More recently, some of the GPU capabilities have been extended by making them programmable to enable and incorporate a wider range of operations. Moreover, to increase the performance GPUs implement processing techniques such as parallel techniques in the entire processing pipeline to maximize the number of operations. Furthermore, traditional machine learning operations utilize high-precision numerical formats such as single-precision floating-point format (FP32), which can lead to significant computational overhead and memory usage. However, such techniques are prone to errors and these compromise on performance of the machine learning models.

### SUMMARY

Embodiments of the present disclosure present technological improvements as solutions to one or more of the above-mentioned technical problems recognized by the inventors in conventional systems.

For example, in one aspect, there is provided a processor implemented method for optimizing computational efficiency and performance of machine learning (ML) models. The method comprises receiving a machine learning (ML) model as an input, wherein the ML model comprises one or more model states comprising at least one or more weights, one or more biases, and one or more activation values, and wherein the one or more model states are in a first precision state; partitioning, via the one or more hardware processors, the one or more model states of the ML model to obtain an optimized set of subgraphs comprising a set of partitioned model states, wherein the optimized set of subgraphs comprising the set of partitioned model states are allocated to a set of processing units; determining, via the one or more hardware processors, an optimal bit-length for offloading at least a subset of the set of partitioned model states to a target precision based on the set of partitioned model states being allocated to the set of processing units; offloading, via the one or more hardware processors, at least the subset of the set of partitioned model states to the target precision based on the optimal bit-length to obtain an offloaded data; optimizing, via the one or more hardware processors, a memory of the set of processing units for storing the offloaded data by applying a memory management technique on a set of elements in the offloaded data; and transferring the offloaded data to a computing node operating in a specific window format and performing a set of broadcast operations thereof to obtain one or more results; and integrating the one or more results into the first precision state based on a mapping of at least the subset of the set of partitioned model states to the offloaded data to obtain a validated integrated result.

In an embodiment, the step of partitioning the one or more model states comprises constructing a dependency graph from the one or more model states, wherein the dependency graph comprises one or more interrelations between the one or more model states; segmenting the dependency graph into a set of subgraphs; allocating the one or more model states to the set of subgraphs, wherein each subgraph comprises `m' number of model states; optimizing, via the one or more hardware processors, one or more boundaries of each subgraph based on the one or more model states being allocated to obtain an optimized set of subgraphs; and allocating the optimized set of subgraphs comprising at least subset of the set of partitioned model states to the set of processing units.

In an embodiment, a model state involved in a frequent inter layer communication with another model state within the dependency graph resides in the same subgraph.

In an embodiment, the step of determining the optimal bit-length for offloading comprises determining an accuracy threshold for a current phase of the ML model; estimating a sensitivity factor of the ML model; evaluating performance of the ML model based on a baseline offloading precision; determining an optimal precision based on the accuracy threshold and the baseline offloading precision; and determining the optimal bit-length for offloading based on the sensitivity factor and the optimal precision.

In an embodiment, the step of offloading at least the subset of the set of partitioned model states to the target precision comprises updating the target precision with the optimal precision; determining an offloading mask corresponding to the target precision to extract a set of bits; for each partitioned model state amongst at least the subset of the set of partitioned model states; retrieving a precision numerical array from the memory of the set of processing units corresponding to the partitioned model state; and extracting a specific set of bits from each partitioned model state in accordance with the target precision based on the offloading mask being applied on each partitioned model state and storing the specific set of bits in the precision numerical array; and mapping at least the subset of the set of partitioned model states to the offloaded data by: indexing at least the subset of the set of partitioned model states to a first order to obtain a first index for each of at least the subset of the set of partitioned model states, wherein the first index serves as a reference for a position of each precision numerical array in at least the subset of the set of partitioned model states; indexing the offloaded data to obtain a second index; and mapping the first index to the second index using a lookup table, wherein a key of the lookup table is the first index and an associated precision numerical array is the second index.

In an embodiment, in a first broadcast operation of the set of broadcast operations, a first set of bits of the offloaded data is broadcasted to the computing node.

In an embodiment, in a second broadcast operation of the set of broadcast operations, a second set of bits of the offloaded data is broadcasted to the computing node.

In an embodiment, when a status of at least the subset of the set of partitioned model states is of a specific type, the method comprises: performing a parallel offloading by partitioning at least the subset of the set of partitioned model states into a set of segments; offloading each segment to an intended precision state using a multi-threaded approach; and combining the offloaded segments upon processing each thread.

In an embodiment, the step of integrating the one or more results into the first precision state comprises initializing a precision numerical array having one or more dimensions expected by the first precision state; for each piece of data in the offloaded data, determining a corresponding position in the first precision state based on a mapping at least the subset of the set of partitioned model states to the offloaded data; inserting an associated piece of data into the corresponding position using a bit-wise operation to obtain an integrated result; and validating the integrated result to obtain the validated integrated result.

In an embodiment, at least the subset of the set of partitioned model states is offloaded to the target precision based on the optimal bit-length to maintain an optimal computational efficiency and an optimal performance of the ML model.

In another aspect, there is provided a processor implemented system for optimizing computational efficiency and performance of machine learning (ML) models. The system comprises: a memory storing instructions; one or more communication interfaces; and one or more hardware processors coupled to the memory via the one or more communication interfaces, wherein the one or more hardware processors are configured by the instructions to receive a machine learning (ML) model as an input, wherein the ML model comprises one or more model states comprising at least one or more weights, one or more biases, and one or more activation values, and wherein the one or more model states are in a first precision state; partition the one or more model states of the ML model to obtain an optimized set of subgraphs comprising a set of partitioned model states, wherein the optimized set of subgraphs comprising the set of partitioned model states are allocated to a set of processing units; determine an optimal bit-length for offloading at least a subset of the set of partitioned model states to a target precision based on the set of partitioned model states being allocated to the set of processing units; offload at least the subset of the set of partitioned model states to the target precision based on the optimal bit-length to obtain an offloaded data; optimize a memory of the set of processing units for storing the offloaded data by applying a memory management technique on a set of elements in the offloaded data; and transfer the offloaded data to a computing node operating in a specific window format and performing a set of broadcast operations thereof to obtain one or more results; and integrate the one or more results into the first precision state based on a mapping of at least the subset of the set of partitioned model states to the offloaded data to obtain a validated integrated result.

In an embodiment, the one or more model states are partitioned by constructing a dependency graph from the one or more model states, wherein the dependency graph comprises one or more interrelations between the one or more model states; segmenting the dependency graph into a set of subgraphs; allocating the one or more model states to the set of subgraphs, wherein each subgraph comprises `m' number of model states; optimizing, via the one or more hardware processors, one or more boundaries of each subgraph based on the one or more model states being allocated to obtain an optimized set of subgraphs; and allocating the optimized set of subgraphs comprising at least subset of the set of partitioned model states to the set of processing units.

In an embodiment, a model state involved in a frequent inter layer communication with another model state within the dependency graph resides in the same subgraph.

In an embodiment, the optimal bit-length for offloading is determined by determining an accuracy threshold for a current phase of the ML model; estimating a sensitivity factor of the ML model; evaluating performance of the ML model based on a baseline offloading precision; determining an optimal precision based on the accuracy threshold and the baseline offloading precision; and determining the optimal bit-length for offloading based on the sensitivity factor and the optimal precision.

In an embodiment, at least the subset of the set of partitioned model states are offloaded to the target precision by updating the target precision with the optimal precision; determining an offloading mask corresponding to the target precision to extract a set of bits; for each partitioned model state amongst at least the subset of the set of partitioned model states; retrieving a precision numerical array from the memory of the set of processing units corresponding to the partitioned model state; and extracting a specific set of bits from each partitioned model state in accordance with the target precision based on the offloading mask being applied on each partitioned model state and storing the specific set of bits in the precision numerical array; and mapping at least the subset of the set of partitioned model states to the offloaded data by: indexing at least the subset of the set of partitioned model states to a first order to obtain a first index for each of at least the subset of the set of partitioned model states, wherein the first index serves as a reference for a position of each precision numerical array in at least the subset of the set of partitioned model states; indexing the offloaded data to obtain a second index; and mapping the first index to the second index using a lookup table, wherein a key of the lookup table is the first index and an associated precision numerical array is the second index.

In an embodiment, in a first broadcast operation of the set of broadcast operations, a first set of bits of the offloaded data is broadcasted to the computing node.

In an embodiment, in a second broadcast operation of the set of broadcast operations, a second set of bits of the offloaded data is broadcasted to the computing node.

In an embodiment, when a status of at least the subset of the set of partitioned model states is of a specific type, the one or more hardware processors are further configured by the instructions to perform a parallel offloading by partitioning at least the subset of the set of partitioned model states into a set of segments; offloading each segment to an intended precision state using a multi-threaded approach; and combining the offloaded segments upon processing each thread.

In an embodiment, the one or more results are integrated into the first precision state by initializing a precision numerical array having one or more dimensions expected by the first precision state; for each piece of data in the offloaded data, determining a corresponding position in the first precision state based on a mapping at least the subset of the set of partitioned model states to the offloaded data; inserting an associated piece of data into the corresponding position using a bit-wise operation to obtain an integrated result; and validating the integrated result to obtain the validated integrated result.

In an embodiment, at least the subset of the set of partitioned model states is offloaded to the target precision based on the optimal bit-length to maintain an optimal computational efficiency and an optimal performance of the ML model.

In yet another aspect, there are provided one or more non-transitory machine-readable information storage mediums comprising one or more instructions which when executed by one or more hardware processors cause optimizing computational efficiency and performance of machine learning (ML) models by receiving a machine learning (ML) model as an input, wherein the ML model comprises one or more model states comprising at least one or more weights, one or more biases, and one or more activation values, and wherein the one or more model states are in a first precision state; partitioning the one or more model states of the ML model to obtain an optimized set of subgraphs comprising a set of partitioned model states, wherein the optimized set of subgraphs comprising the set of partitioned model states are allocated to a set of processing units; determining an optimal bit-length for offloading at least a subset of the set of partitioned model states to a target precision based on the set of partitioned model states being allocated to the set of processing units; offloading at least the subset of the set of partitioned model states to the target precision based on the optimal bit-length to obtain an offloaded data; optimizing a memory of the set of processing units for storing the offloaded data by applying a memory management technique on a set of elements in the offloaded data; and transferring the offloaded data to a computing node operating in a specific window format and performing a set of broadcast operations thereof to obtain one or more results; and integrating the one or more results into the first precision state based on a mapping of at least the subset of the set of partitioned model states to the offloaded data to obtain a validated integrated result.

In an embodiment, the step of partitioning the one or more model states comprises constructing a dependency graph from the one or more model states, wherein the dependency graph comprises one or more interrelations between the one or more model states; segmenting the dependency graph into a set of subgraphs; allocating the one or more model states to the set of subgraphs, wherein each subgraph comprises `m' number of model states; optimizing, via the one or more hardware processors, one or more boundaries of each subgraph based on the one or more model states being allocated to obtain an optimized set of subgraphs; and allocating the optimized set of subgraphs comprising at least subset of the set of partitioned model states to the set of processing units.

In an embodiment, a model state involved in a frequent inter layer communication with another model state within the dependency graph resides in the same subgraph.

In an embodiment, the step of determining the optimal bit-length for offloading comprises determining an accuracy threshold for a current phase of the ML model; estimating a sensitivity factor of the ML model; evaluating performance of the ML model based on a baseline offloading precision; determining an optimal precision based on the accuracy threshold and the baseline offloading precision; and determining the optimal bit-length for offloading based on the sensitivity factor and the optimal precision.

In an embodiment, the step of offloading at least the subset of the set of partitioned model states to the target precision comprises updating the target precision with the optimal precision; determining an offloading mask corresponding to the target precision to extract a set of bits; for each partitioned model state amongst at least the subset of the set of partitioned model states; retrieving a precision numerical array from the memory of the set of processing units corresponding to the partitioned model state; and extracting a specific set of bits from each partitioned model state in accordance with the target precision based on the offloading mask being applied on each partitioned model state and storing the specific set of bits in the precision numerical array; and mapping at least the subset of the set of partitioned model states to the offloaded data by: indexing at least the subset of the set of partitioned model states to a first order to obtain a first index for each of at least the subset of the set of partitioned model states, wherein the first index serves as a reference for a position of each precision numerical array in the at least subset of the set of partitioned model states; indexing the offloaded data to obtain a second index; and mapping the first index to the second index using a lookup table, wherein a key of the lookup table is the first index and an associated precision numerical array is the second index.

In an embodiment, in a first broadcast operation of the set of broadcast operations, a first set of bits of the offloaded data is broadcasted to the computing node.

In an embodiment, in a second broadcast operation of the set of broadcast operations, a second set of bits of the offloaded data is broadcasted to the computing node.

In an embodiment, when a status of at least the subset of the set of partitioned model states is of a specific type, the method comprises: performing a parallel offloading by partitioning at least the subset of the set of partitioned model states into a set of segments; offloading each segment to an intended precision state using a multi-threaded approach; and combining the offloaded segments upon processing each thread.

In an embodiment, the step of integrating the one or more results into the first precision state comprises initializing a precision numerical array having one or more dimensions expected by the first precision state; for each piece of data in the offloaded data, determining a corresponding position in the first precision state based on a mapping at least the subset of the set of partitioned model states to the offloaded data; inserting an associated piece of data into the corresponding position using a bit-wise operation to obtain an integrated result; and validating the integrated result to obtain the validated integrated result.

In an embodiment, at least the subset of the set of partitioned model states is offloaded to the target precision based on the optimal bit-length to maintain an optimal computational efficiency and an optimal performance of the ML model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for optimizing computational efficiency and performance of machine learning (ML) models, in accordance with an embodiment of the present disclosure.
FIG. 2 depicts an exemplary flow chart illustrating a method for optimizing computational efficiency and performance of machine learning (ML) models, using the system of FIG. 1, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

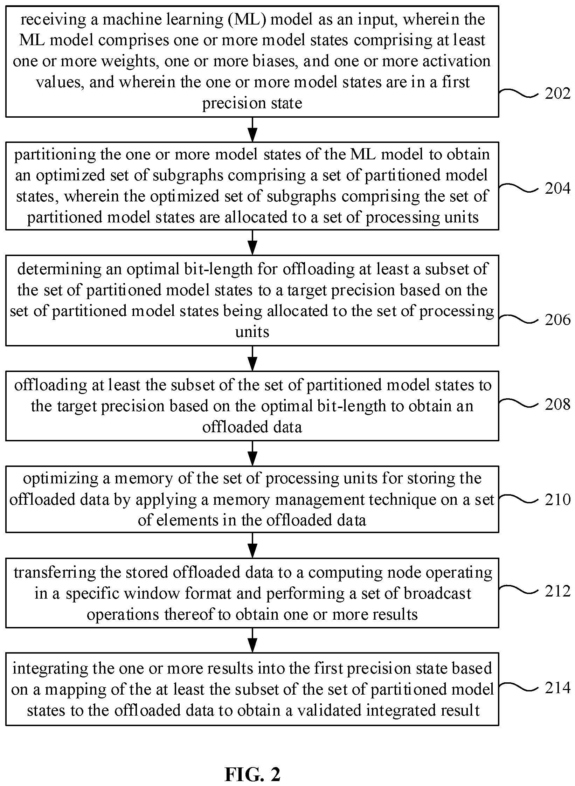

As mentioned earlier, traditional machine learning operations utilize high-precision numerical formats such as FP32, which can lead to significant computational overhead and memory usage. Hence, it is imperative that the precision of these computations needs to be reduced without compromising the accuracy of the machine learning models. Embodiments of the present disclosure provide systems for optimizing computational efficiency and performance of machine learning (ML) models where the system 100 of the present disclosure implements the method of FIG. 2 which significantly reduces the precision requirement of machine learning computations. This is achieved through parallelism, where model states of the ML model are divided into smaller chunks, offloading is done, where only a portion of the numerical precision is utilized, and finally partitioning is performed, and model states are computed in a two-step broadcast operation to efficiently manage computational resources.

More specifically, ML model is fed as an input, which consists of weights, biases, activation functions, and other parameters, into the precision folding system. This model would typically be a trained model, which has already been optimized to perform a specific task based on a particular dataset. Before initialization, partitioning or sharding could potentially be done as a pre-processing step before the ML model is initialized for execution. This would involve analyzing the model structure and data flow to determine how to best divide the model states into smaller chunks for efficient parallel processing. During execution, partitioning could be dynamic and occur during the execution of the ML model. In this case, the sharding algorithm would need to make real-time decisions about how to partition the model states to respond to changing computational loads or data patterns. The system of the present disclosure is designed to adapt to different ML models/Generative AI models, and applications, meaning that the precision folding and associated sharding could be generic enough to handle various types of neural networks or machine learning algorithms. The primary objective is to run the model more efficiently on the available hardware, especially in environments where resources like memory bandwidth are limited, or where it is desirable to run the model on lower-precision hardware without significant loss of accuracy.

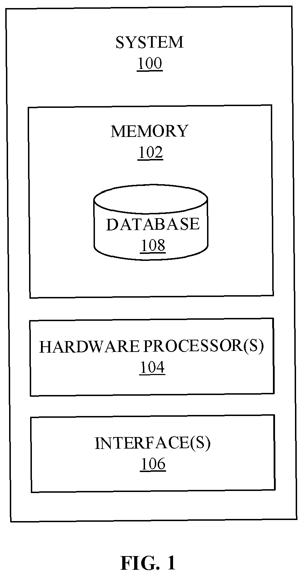

Referring now to the drawings, and more particularly to FIGS. 1 through 2, where similar reference characters denote corresponding features consistently throughout the figures, there are shown preferred embodiments and these embodiments are described in the context of the following exemplary system and/or method.

FIG. 1 depicts an exemplary system 100 for optimizing computational efficiency and performance of machine learning (ML) models, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more machine learning models (e.g., artificial intelligence (AI) based machine learning models, large language models (LLMs), linear regression model(s), neural networks, and the like.). The database 108 further comprises one or more algorithms/technique(s) such as sharding algorithm(s)/technique(s), offloading algorithm(s)/technique(s), complementary algorithm(s)/technique(s), graph partitioning methodologies/algorithm(s)/technique(s), and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

FIG. 2, with reference to FIG. 1, depicts an exemplary flow chart illustrating a method for optimizing computational efficiency and performance of machine learning (ML) models, using the system 100 of FIG. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive a machine learning (ML) model as an input. The ML model comprises one or more model states (also referred to as `model states' and interchangeably used herein) comprising at least one or more weights (also referred to as 'weights' and interchangeably used herein), one or more biases (also referred to as 'biases' and interchangeably used herein), and one or more activation values (also referred to as `values' and interchangeably used herein). The one or more model states are in a first precision state. For instance, the model states are in an original precision. An example of a simple machine learning model would be a neural network (NN) for image classification. The task for the NN is to classify images into categories (e.g., grouping of animals), and type of neural network (or machine learning model) is a feedforward neural network. The input includes but is not limited to, images of size x*y pixels (e.g., 28*28 pixels), in a specific format (e.g., grayscale). The output of the NN would be in say 2 categories (e.g., cat (0), or dog (1)). The ML model architecture includes (i) an input layer with size a*b neurons (e.g., 28*28 neurons, (for each pixel in the image), and pixel intensity values initialized between 0 and 1; (ii) a first hidden layer (e.g., hidden layer 1) of type full connected, having size of 128 neurons, an activation function such as ReLU (Rectified Linear Unit), randomly initialized weights ranging from say (-p to +p, wherein value of p could be 0.5), and with biases initialized to 0; (iii) a second hidden layer (e.g., hidden layer 2) of type full connected, having size of 64 neurons, an activation function such as ReLU (Rectified Linear Unit), randomly initialized weights similar to the first hidden layer, and with biases initialized to 0; and an output layer of type full connected, having size of 2 neurons (e.g., one for each category - cat or dog), an activation function such as Softmax (for probability distribution), randomly initialized weights similar to above layers, and with biases initialized to 0. The training details of the NN includes but are not limited to, labeled dataset of images (cats and dogs), a learning rate: 0.01 (hypothetical value), a loss function such as cross-entropy loss, and an optimizer such as Stochastic Gradient Descent (SGD). The input image date may be a c*d matrix (e.g., 28*28 matrix), where each cell value represents the pixel intensity (normalized). Further, weights in the first hidden layer could be a 784x128 matrix (since the input is 28x28=784, and there are 128 neurons in the first hidden layer). Operations of the NN includes flattening the input image into a 784-dimensional vector (if it is not already in the desired format). This vector is then fed through the layers of the NN, where each neuron computes a weighted sum of its inputs, adds a bias, and applies an activation function. The output layer uses the softmax function to produce a probability distribution over the two classes (cat and dog). It is to be understood by a person having ordinary skill in the art or person skilled in the art that the above example of the ML model and its architecture shall not be construed as limiting the scope of the present disclosure. In practice, actual values for weights and biases depend on the specific implementation and may undergo a change over the course of training. The architecture can be more complex depending on the task and the dataset.

In the present disclosure, it is assumed that the ML model has been trained on a specific dataset for a particular application. The method of the present disclosure would then be applied to this trained ML model to enhance computational efficiency during its use, for example, during inference tasks. Examples of the ML models include but are not limited to artificial intelligence (AI) based machine learning models, linear regression model(s), neural networks, reinforcement learning (RL) models, Generative AI models such as large language models (LLMs), Generative Adversarial Networks (GANs), Transformer-based models such as Generative Pre-Trained (GPT) language models, variants of the above models/agents, and the like. It is to be understood by a person having ordinary skill in the art or person skilled in the art that the above examples of ML models shall not be construed as limiting the scope of the present disclosure.

Referring to steps of FIG. 2, at step 204 of the method of the present disclosure, the one or more hardware processors 104 partition the one or more model states of the ML model to obtain an optimized set of subgraphs comprising a set of partitioned model states. The optimized set of subgraphs comprising the set of partitioned model states are then allocated to a set of processing units. Partitioning (also referred to as sharding and may be interchangeably used herein) could potentially be done as a pre-processing step before the ML model is initialized for execution. This would involve analyzing the ML model's structure and data flow to determine how to best divide the model states into smaller chunks for efficient parallel processing. Alternatively, partitioning could be dynamic and can occur during the execution of the ML model. In this case, the sharding algorithm would need to make real-time decisions about how to partition the model states to respond to changing computational loads or data patterns.

The above step of partitioning is better understood by way of following description:
First, a dependency graph is constructed using the one or more model states. The dependency graph comprises one or more interrelations between the one or more model states. Below steps illustrate dependency graph construction along with interrelations between the model states:
1. Step 1: Identify the Model States - In a neural network, model states typically include weights, biases, and activations for each layer. Consider a simple feedforward neural network with an input layer, two hidden layers, and an output layer.
2. Step 2: Determine Dependencies - Input Layer: Receives external data (e.g., image pixels, text data). Hidden Layer 1: Depends on the input layer's outputs and its own weights and biases. Hidden Layer 2: Depends on Hidden Layer 1's outputs and its own weights and biases. Output Layer: Depends on Hidden Layer 2's outputs and its own weights and biases.
3. Step 3: Construct the Dependency Graph - Nodes: Each node represents a layer (Input, Hidden Layer 1, Hidden Layer 2, Output) or a set of model states (weights, biases). Edges: Draw directed edges from each layer to the subsequent layer, indicating the flow of computation and dependencies. For example: an edge from the Input Layer node to the Hidden Layer 1 node. An edge from the Hidden Layer 1 node to the Hidden Layer 2 node, and so on. Additional Dependencies: If there are specific dependencies within layers (e.g., certain weights affecting specific activations), these can be represented as additional edges within the graph.

Then, the dependency graph is segmented into a set of subgraphs based on which the one or more model states to the set of subgraphs. The system 100 ensures that each subgraph comprises `m' number of model states. Below is an example of segmenting a large dependency graph of model states into subgraphs with intergraph communication which can be exemplified in a complex neural network:
**Large Dependency Graph:** Consider a deep neural network with multiple layers and complex interconnections, including skip connections and recurrent loops.

### Segmenting into Subgraphs:

**Subgraph 1:** Consists of initial layers (e.g., L1 to L5). Handles early-stage data processing.
**Subgraph 2:** Contains middle layers (e.g., L6 to L10), which may have connections back to earlier layers (e.g., skip connections from L10 to L3).
**Subgraph 3:** Includes the final layers (e.g., L11 to L15), including output layers.

### Intergraph Communication:

Subgraph 2 communicates with Subgraph 1 due to skip connections.

Recurrent loops in Subgraph 3 might require feedback from its own output or from other subgraphs.

In this setup, each subgraph manages a portion of the network, but they communicate due to the interconnected nature of the model states. In other words, each subgraph has equal number of model states.

Further, one or more boundaries of each subgraph are optimized based on the one or more model states being allocated to obtain an optimized set of subgraphs. The optimized set of subgraphs comprising are at least subset of the set of partitioned model states then allocated to the set of processing units (e.g., say graphics processing units (GPUs).

In the example of the neural network model sharding, system is allocated to the subgraphs (shards) based on their specific requirements and dependencies. Each shard, containing a segment of the model like certain layers, is assigned to a processing unit capable of handling its computational load. The allocation considers the interdependencies and communication patterns identified during the sharding process. This ensures that shards with closely linked computations are processed in a way that optimizes overall efficiency and minimizes inter-shard communication overhead. The processing units could be different cores in a multi-core system, separate GPUs, or distributed nodes in a network, depending on the system's architecture and the model's complexity.

The above step is better understood by way of following description: The ML model parameters (also referred to as `model states' and interchangeably used herein) such as weights, biases, and activation values are fed to the system 100 as input for partitioning. The ML model's computational architecture is analyzed to discern data dependencies and communication requisites. Dependency analysis is performed which includes conducting a thorough examination of the ML model to ascertain interdependencies among parameters. A graphical representation (also referred to as the dependency graph and interchangeably used herein) is then constructed delineating the interrelations of ML model parameters. The system 100 and the method then employs/implements graph partitioning methodologies (as known in the art) to segment the dependency graph into smaller, intercommunicative subgraphs (e.g., also referred to as shards, and interchangeably used herein). The partitioning is balanced such that each shard encompasses an approximately equivalent quantity of parameters, fostering uniform computational distribution. The model states are then allocated to shards based on the graph segmentation outcomes. Allocation is optimized to ensure parameters with frequent inter-layer communication reside within the same shard to reduce inter-shard traffic. For instance, a model state (e.g., MS1) involved in a frequent inter layer communication with another model state (e.g., MS2) within the dependency graph (DS) resides in the same subgraph (e.g., SG1). In other words, both MS1 and MS2 reside in the same subgraph, SG1. A series of computational trials are then performed to pinpoint and rectify bottlenecks in model states communication and processing. Shard boundaries are fine-tuned to abate communication overhead and achieve a more balanced computational load. The boundaries of each shard are confirmed, and shards are allocated to specific processing units. Metadata delineating shard interdependencies and requisite communication protocols is codified for operational efficiency during runtime.

The above step of partitioning the one or more model states of the ML model to obtain the optimized set of subgraphs comprising the set of partitioned model states may be further better understood by way of following exemplary description:
1. Model Overview:
   a. Task: Classify high-resolution images into various categories.
   b. Type of Model: Convolutional Neural Network (CNN).
   c. Input: High-resolution images (e.g., 256x256 pixels, RGB).
   d. Output: Multiple categories (e.g., different types of objects).
2. Model Architecture:
   a. Input Layer: Size: 256x256x3 neurons (for each RGB pixel in the image).
   b. Convolutional Layers:
      i. Several layers with varying numbers of filters (e.g., 32, 64, 128 filters)
      ii. Filter (Kernel) Size: Commonly 3x3 or 5x5.
      iii. Activation Function: ReLU.
   c. Pooling Layers:
      i. Placed typically after convolutional layers.
      ii. Type: Max Pooling.
      iii. Pooling Size: 2x2.
   d. Fully Connected Layers:
      i. Later in the network, after several convolutional and pooling layers.
      ii. Size: Varies (e.g., 1024, 512 neurons).
   e. Output Layer:
      i. Size: Corresponds to the number of categories.
      ii. Activation Function: Softmax.
3. Partitioning Model States:
   a. Partitioning Approach:
      i. By Layers
         1. Each layer (or group of layers) of the CNN can be considered a partition or shard. For example, the first two convolutional layers and their weights form one shard, the next two pooling layers form another shard, and so on.
      ii. By Feature Maps:
         1. In convolutional layers, the feature maps (output of filters) can be partitioned. For instance, if a layer has 128 filters, the feature maps can be split into groups (e.g., 64 feature maps per group) to form different shards.
      iii. By Neurons in Fully Connected Layers:
         1. The neurons in the dense (fully connected) layers can be partitioned. For instance, if a layer has 1024 neurons, it could be divided into smaller groups (e.g., 256 neurons each).
4. Example of Partitioning:
   a. Shard 1: Input Layer + First Convolutional Layer.
   b. Shard 2: Second Convolutional Layer + First Pooling Layer.
   c. Shard 3: Third Convolutional Layer + Second Pooling Layer.
   d. Shard N: Last Fully Connected Layer + Output Layer.
5. Purpose of Partitioning:
   1. Parallel Processing: Each shard can be processed on different processing units, allowing for parallel computation.
   2. Memory Management: Partitioning helps in managing memory more efficiently, especially when dealing with large models or limited hardware resources.
   3. Distributed Training: In distributed systems, different shards can be trained on different nodes.

Referring to steps of FIG. 2, at step 206 of the method of the present disclosure, the one or more hardware processors 104 determine an optimal bit-length for offloading at least a subset of the set of partitioned model states to a target precision based on the set of partitioned model states being allocated to the set of processing units. More particularly, in the present disclosure, the system 100 and the method determine the optimal bit-length to offload the partitioned model states such as the one or more weights, and the one or more biases to the target precision, in an example embodiment. The system and method of the present disclosure may also offload model states such as (i) the one or more weights, and the one or more activation values to the target precision, and/or (ii) the one or more biases, and the one or more activation values to the target precision. It is to be understood by a person having ordinary skill in the art or person skilled in the art that either the subset of the set of partitioned model states or the entire set of partitioned model states are offloaded to the target precision, and such offloading technique shall not be construed as limiting the scope of the present disclosure. For offloading, first, an accuracy threshold is determined for a current phase of the ML model. For example, in the present disclosure, an accuracy threshold of 95% is determined/assumed. This means the ML model's performance with reduced precision should not fall below 95% of its performance at full precision. The current phase is "Inference", in one example embodiment. In this phase, the ML model is being used to make predictions on new data.

The accuracy threshold could be determined based on historical performance data of the model. For instance, if the model at full precision has an accuracy of 98%, the Accuracy Threshold at 95% would mean the ML model's accuracy should stay above 93.1% (95% of 98%) after precision reduction.
Further, a sensitivity factor of the ML model is estimated. The calculation of the sensitivity factor in the context of precision folding, where a 32-bit representation is split into two 16-bit precisions (MSB and LSB), involves assessing the impact of operating primarily on LSBs:
1. Assumption: The model's accuracy is primarily sensitive to changes in LSB values.
2. Experiment Setup:
   Run the model with full 32-bit precision and record its performance (accuracy, loss, etc.).
   Then run the model using only the LSB 16 bits for computation, keeping the MSB 16 bits constant.
3. Performance Measurement:
   Measure the model's performance again using only the LSB 16 bits.
   Compare this performance with the full 32-bit precision performance.
4. Sensitivity Factor Calculation: Sensitivity Factor = (Performance with Full Precision - Performance with LSB Only)/Performance with Full Precision. For example, if full precision accuracy is 95% and LSB-only accuracy is 90%, Sensitivity Factor = (95% - 90%) / 95% = 5.26%.

This sensitivity factor indicates how sensitive the model's performance is to precision reduction in LSBs, guiding the balance between computational efficiency and accuracy maintenance.

The performance of the ML model is then evaluated based on a baseline offloading precision being set. An optimal precision is then determined based on the accuracy threshold and the baseline offloading precision. Finally, the optimal bit-length for offloading is determined based on the sensitivity factor and the optimal precision. Below is an example of ML model performance evaluation.
i. Baseline Precision Setting: Implement precision folding where the 32-bit model states are split into two 16-bit representations - LSB16 and MSB 16. Use LSB 16 for regular computations.
ii. Model Execution: Operate the model primarily on LSB16, only updating MSB16 on overflows. This simulates a scenario with reduced precision.
iii. Performance Metrics: Measure the model's accuracy and loss under this precision folding scenario. Assume the accuracy with LSB16 operations is 89%.
iv. Comparison: Compare this to the full 32-bit precision model's accuracy, say 93%.
v. Analysis: The reduction from 93% to 89% accuracy highlights the effects of precision reduction on model performance.
vi. Decision: Determine if the trade-off between computational efficiency and slight loss in accuracy is acceptable for the application's needs.

The above step of optimal bit-length determination is better understood by way of following description:
The optimal bit-length for offloading is designed to minimize the amount of data transferred between main memory and the set of processing units, thereby reducing the memory bandwidth requirements and power consumption. The system 100 and the method of the present disclosure employ various techniques for determining the optimal bit-length for offloading. For instance, system 100 may execute a reduced precision offloading technique (e.g., the reduced precision offloading technique is stored in the memory 102 and invoked for execution). Hence, instead of transferring the full precision of model states, the system 100 offloads only the last 16 Least Significant Bits (LSB) of the numerical data. This partial offloading preserves the essential information for computation while significantly reducing the data footprint. The offloading algorithm determines the optimal bit-length for offloading, which may be dynamically adjusted based on the computational phase or the specific requirements of the model.

For instance, system 100 may execute a reduced precision offloading technique (e.g., the dynamic precision offloading technique is stored in the memory 102 and invoked for execution). The dynamic precision offloading technique selects the optimal bit-length to offload for model state parameters to maintain a balance between computational efficiency and model accuracy. The dynamic precision offloading technique represents a significant technical advancement in the realm of machine learning computations. The dynamic precision offloading technique's ability is to adapt the precision of offloaded data in real-time, responding to the dual objectives of computational efficiency and ML model performance. By employing a dynamic adjustment mechanism, the dynamic precision offloading technique can tailor the precision to the varying demands of different computational phases. This adaptability ensures that the system maintains high accuracy levels where necessary while reducing the data footprint when possible, leading to increased overall efficiency. The dynamic precision offloading technique provides practical utility in environments where bandwidth is limited, and computation resources are at a premium. It allows for more efficient use of memory and processing units, facilitating the deployment of complex machine learning models on a broader range of hardware, including those with limited computational power. The dynamic precision offloading technique is particularly useful for edge computing applications where local processing power and memory are constrained. For creating and implementing the dynamic precision offloading technique that determines the optimal bit-length for offloading as described, the system 100 considers the factors affecting the choice of precision, such as the computational phase, model performance requirements, and the data footprint.

Below is a pseudo code for the dynamic precision offloading technique, by way of example:
Initialization:
   - Let 'ModelStates' be the full-precision model parameters.
   - Let 'Phase' indicate the current computational phase of the model.
Steps of the dynamic precision offloading technique:
   1. Assess ML model requirements:
      a. Determine the accuracy/performance requirements 'performance/accuracy Threshold' for the current 'Phase'.
      b. Estimate the sensitivity `SensitivityFactor' of the ML model to precision reduction.
   2. Calculate Baseline Precision:
      a. Set a baseline offloading precision 'BaselinePrecision' (e.g., 16 bits for LSBs).
      b. Evaluate the model performance with 'BaselinePrecision'.
   3. Determine Optimal Precision:
      a. Initialize `OptimalPrecision' to 'BaselinePrecision'.
      b. While model performance ≥ `AccuracyThreshold' :
         i. Incrementally reduce 'OptimalPrecision'.
         ii. Evaluate model performance with the new 'OptimalPrecision'.
         iii. If model performance falls below `AccuracyThreshold', revert to the last valid `OptimalPrecision'.
   4. Adjust for Computational Phase:
      i. If 'Phase' is computationally intensive, prioritize efficiency by increasing `OptimalPrecision' decrement steps.
      ii. If 'Phase' is sensitive to accuracy, prioritize precision by decreasing `OptimalPrecision' decrement steps.
   5. Offloading Decision:
      i. Based on `SensitivityFactor' and the adjusted `OptimalPrecision', determine the final bit-length to offload.
   6. Implementation:
      i. Implement the offloading of model states with the determined optimal bit-length.
      ii. Monitor the ML model performance and adjust `OptimalPrecision' as needed in real-time.

The above steps of offloading technique are better understood by way of following description. The full-precision parameters of the model are taken as input. The system 100 then assesses that during the inference phase, maintaining at least 95% of the original model's accuracy is crucial. The initial offloading precision is then set, for example, to 16 bits, and how the ML model performs is evaluated. If the model's performance at 16 bits meets the Accuracy Threshold, the algorithm might test further reduction, say to 12 bits, and reassess performance. Given the inference phase, the algorithm may prioritize maintaining accuracy over computational efficiency. The final bit-length for offloading is decided based on these evaluations and implemented for model state offloading. In this example, the DPO algorithm dynamically determines the optimal precision for offloading, thus ensuring that the ML model's performance remains above the set accuracy threshold while optimizing for efficiency during the specific computational phase of inference.

In an embodiment, at least the subset of the set of partitioned model states is offloaded to the target precision based on the optimal bit-length to maintain an optimal computational efficiency and an optimal performance of the ML model.

Referring to steps of FIG. 2, at step 208 of the method of the present disclosure, the one or more hardware processors 104 offload at least the subset of the set of partitioned model states to the target precision based on the optimal bit-length to obtain an offloaded data. As mentioned above, in the present disclosure, the system 100 and the method offload the partitioned model states such as the one or more weights, and the one or more biases to the target precision, in an example embodiment. The system and method of the present disclosure may also offload model states such as (i) the one or more weights, and the one or more activation values to the target precision, and/or (ii) the one or more biases, and the one or more activation values to the target precision to the target precision. The step of offloading at least the subset of the set of partitioned model states to the target precision is better understood by way of following description:

First, the target precision is updated with the optimal precision. An offloading mask corresponding to the target precision is determined to extract a set of bits (e.g., relevant bits). Then for each partitioned model state amongst the at least the subset of the set of partitioned model states, a precision numerical array from the memory of the set of processing units corresponding to the partitioned model state is retrieved. Further, a specific set of bits (e.g., say least significant bits (LSB)) from each partitioned model state are extracted in accordance with the target precision based on the offloading mask being applied on each partitioned model state and storing the specific set of bits in the precision numerical array. The at least the subset of the set of partitioned model states are mapped to the offloaded data. The mapping includes indexing the at least the subset of the set of partitioned model states to a first order (e.g., also referred to as `original order' and interchangeably used herein) to obtain a first index (e.g., also referred to as 'original index' and interchangeably used herein) for each of the at least the subset of the set of partitioned model states. The first index serves as a reference for a position of each precision numerical array in the at least the subset of the set of partitioned model states. Further, the offloaded data is indexed to obtain a second index (e.g., also referred to as 'offloaded index' and interchangeably used herein). The first index is mapped to the second index using a lookup table. A key of the lookup table is the first index, and an associated precision numerical array is the second index.

Below is a pseudo code for the step of offloading at least the subset of the set of partitioned model states to the target precision provided by way of following example:
1. Initialization:
   a. Determine the target precision for offloading (e.g., INT16, FP16, BFP16, INT4) as derived by the dynamic precision offloading algorithm.
   b. An offloading mask corresponding to the target precision is determined/defined to extract the relevant bits (e.g., 0xFFFF for INT16). For instance, when dealing with reduced precision offloading, such as offloading to an INT16 format, the system 100 works with 16-bit integers. The offloading mask in this context is a binary pattern that would be applied to a full precision data value to extract only the bits that are relevant for the reduced precision format. For a target precision of INT16, the offloading mask would indeed be 0xFFFF. This is because 0xFFFF in hexadecimal represents a 16-bit number where all bits are set to 1. In binary, this is 1111 1111 1111 1111. When this offloaded mask is applied to a full precision data value, it extracts the 16 Least Significant Bits (LSBs) of the value. The above step 1(b) may be better understood by way of following example: Full precision value (32 bits): 0x12345678, Target precision (INT16): 0x00005678, and offloading mask for INT16: 0x0000FFFF.
2. For each model state (weights, activations):
   a. Retrieve the full precision numerical array.
   b. Apply the mask to extract the least significant bits (LSB) according to the target precision. Store the extracted LSB in a new data structure (e.g., the precision numerical array) designated for offloaded data.
3. Data Mapping:
   a. Create a mapping that relates the position of each original full precision value to its corresponding offloaded LSB representation and stored using sharding algorithm.
   b. Ensure that the mapping allows for a reconstruction of the original data if necessary, post-computation.

In other words, the data mapping described is a specific technique to relate the original full-precision values with their corresponding offloaded reduced-precision representation. This mapping is not a standard technique but rather a specialized approach designed to meet the needs of the precision folding system and to facilitate reconstruction of the original data after computation.

### 3.1. Data Mapping Creating Process:

a. Establish full-precision indexing: Each full-precision value in the dataset is indexed in its original order. This index serves as a reference for the position of each value in the full-precision dataset.
b. Apply the offloading mask: An offloading mask corresponding to the target precision is applied to each full-precision value to extract the reduced-precision LSB representation. For instance, applying a 0xFFFF mask to extract the 16 LSBs for INT16 precision as mentioned above.
c. Record reduced-precision indexing: The offloaded reduced-precision values are also indexed. This index relates to their position within the offloaded dataset.
d. Generate the mapping: A mapping is created that ties each original full-precision index to the corresponding reduced-precision index. This can be done via a lookup table or associative array where the key is the full-precision index, and the value is the reduced-precision index.
e. Store metadata for reconstruction: Along with the mapping, metadata is stored to facilitate reconstruction. This includes the offloading mask, any scaling factors used, and the precision level.
f. Utilize sharding/partitioning for distributed storage: The partitioning/sharding algorithm (refer to the algorithm in the sharding mentioned above) partitions the full-precision dataset and the corresponding reduced-precision dataset into shards. The mapping and metadata are also sharded/partitioned, ensuring that the reconstruction information is co-located with the data it pertains to.

Below is an exemplary pseudo code for data mapping creation (e.g., mapping the at least the subset of the set of partitioned model states are mapped to the offloaded data):
1. Function CreateDataMapping(FullPrecisionData, TargetPrecisionMask):
   a. FullPrecisionIndexMap <- Empty Map
   b. ReducedPrecisionIndexMap <- Empty Map
   c. Mapping <- Empty Map

   for each Value in FullPrecisionData:
      a. FullIndex <- IndexOf(Value)
      b. ReducedValue <- ApplyMask(Value, TargetPrecisionMask)
      c. ReducedIndex <- IndexOf(ReducedValue)
      d. FullPrecisionIndexMap[FullIndex] <- Value
      e. ReducedPrecisionIndexMap[ReducedIndex] <- ReducedValue
   Mapping[FullIndex] <- ReducedIndex
   return Mapping, FullPrecisionIndexMap,
   ReducedPrecisionIndexMap

Referring to steps of FIG. 2, at step 210 of the method of the present disclosure, the one or more hardware processors 104 optimize a memory of the set of processing units for storing the offloaded data by applying a memory management technique on a set of elements in the offloaded data. The system 100 uses a memory manager mechanism (stored in the memory 102 and invoked for execution) for storing the offloaded LSB data, thus ensuring minimal memory footprint. More specifically, the system 100 implements efficient data structures that support quick access and manipulation of the offloaded data. The above step of optimizing the memory of the set of processing units is better understood by way of following description:

The memory manager mechanism is implemented by the system 100 for managing offloaded LSB handles allocation, deallocation, and access to the offloaded data efficiently. The pseudo code for the memory manager that optimizes memory allocation for storing offloaded LSB data focuses on minimizing the memory footprint and providing efficient access. Below is an example pseudo code for optimizing the memory of the set of processing units for storing the offloaded data:

Pseudo code for optimized memory management for data offloading
1. Initialization:
   a. Set `BlockSize' to match the target precision length (e.g., 16 bits for INT 16).
   b. Initialize `MemoryPool', a collection of pre-allocated memory blocks.
   c. Create `FreeList', a queue or stack to track available memory blocks.
2. Allocate Memory Block:
   a. Input: Requested number of elements, 'NumElements'.
   b. Calculate 'RequiredBlocks' based on 'NumElements' and 'BlockSize'.
   c. If 'FreeList' has enough blocks, assign them to the request; otherwise, expand `MemoryPool' .
3. Store LSB Data:
   a. Input: A list of offloaded LSB data, 'LSBDataList'.
   b. For each LSB data item:
      i. Find an available block from 'MemoryPool'.
      ii. Calculate the 'Offset' within the block and store the data.
      iii. Update the mapping table with the block ID and 'Offset'.
4. Retrieve LSB Data:
   a. Input: List of indices to retrieve, 'IndicesList'.
   b. For each index in 'IndicesList':
      i. Lookup the corresponding block ID and 'Offset' from the mapping table.
      ii. Retrieve the LSB data from the memory block.
5. Deallocation and memory reclamation:
   a. Input: List of block IDs to deallocate, `BlockIDs'.
   b. For each block ID in `BlockIDs' :
      i. Clear the block's data.
      ii. Add the block back to 'FreeList'.
6. Optimization and Garbage collection:
   a. Periodically check `MemoryPool' for unused blocks.
   b. Merge adjacent free blocks to reduce fragmentation.
   c. Reorganize `MemoryPool' to ensure quick access to free blocks.
7. Dynamic Adjustment:
   a. Monitor memory usage patterns.
   b. Adjust 'BlockSize' and reorganize `MemoryPool' if a different precision becomes more prevalent.

The above pseudo code is executed wherein the system 100 dynamically adjusts variable precision requirements of offloaded LSB data, an aspect crucial for machine learning and data processing applications. It introduces a mechanism for efficient memory utilization, which is particularly beneficial when operating within memory-constrained environments or when aiming to increase data processing throughput. The above pseudo code and the step of optimizing the memory of the set of processing units for storing the offloaded data is better understood by way of following example. The system 100 considered a ML model type: Neural Network for image classification, with original weight precision: 32-bit floating-point (FP32), offloaded weight precision: 16-bit integer (INT16), and Task: offload weights from FP32 to INT16, store them efficiently, and then retrieve them for computations. The memory management is obtained as follows for the above example:
1. Initialization:
   a. BlockSize: Set to 16 bits (INT16).
   b. MemoryPool: Pre-allocated memory blocks, each capable of storing a certain number of 16-bit values.
   c. FreeList: A stack to track available memory blocks in the MemoryPool.
2. Allocate Memory Block:
   a. NumElements: System 100 assumes that there is a need to store 10,000 offloaded weights.
   b. RequiredBlocks: Calculate based on 10,000 weights and 16-bit BlockSize. It is assumed that it results in 100 blocks (for simplicity).
3. Store LSB Data:
   a. LSBDataList: List of 10,000 weights converted to INT16 format.
   b. For each weight in LSBDataList:
      i. Find an available block from MemoryPool.
      ii. Calculate Offset within the block and store the weight.
      iii. Update mapping table with block ID and Offset.
4. Retrieve LSB Data:
   a. IndicesList: List of indices for weights to be retrieved, e.g., [15, 200, 1500].
   b. For each index in IndicesList:
      i. Lookup block ID and Offset in mapping table.
      ii. Retrieve the LSB data (weight) from the memory block.
5. Deallocation and Memory Reclamation:
   a. BlockIDs to Deallocation: After processing, assume blocks 1, 5, and 10 are no longer needed.
   b. Clear data in these blocks and add them back to FreeList.
6. Optimization and Garbage collection:
   a. Periodically check MemoryPool for unused blocks.
   b. Merge adjacent free blocks if fragmentation is detected.
   c. Reorganize MemoryPool for faster access to frequently used blocks.
7. Dynamic Adjustment:
   a. If the model's computational phase changes, leading to different precision requirements (e.g., switching to 8-bit INT8), the system 100 adjusts BlockSize and reorganizes MemoryPool accordingly.

### Example Scenario:

1. Offloading Process: Converting FP32 weights to INT16 and storing them in the optimized memory structure.
2. Computational Phase: Using these offloaded weights for forward and backward passes during training or for inference.
3. Memory Optimization: Ensuring that the memory footprint is minimized while maintaining efficient access and manipulation of the offloaded weights.

Referring to steps of FIG. 2, at step 212 of the method of the present disclosure, the one or more hardware processors 104 transfer the offloaded data to a computing node operating in a specific window format (e.g., sliding window format) and performing a set of broadcast operations thereof to obtain one or more results. A dedicated computing node (also referred to as `computation node'), specifically designed for 32-bit operations, performs the necessary computations. This node operates on a sliding window format, moving through the data as it computes, which allows for continuous processing without the need for large memory buffers. The computing node is configured to executing various operations, including but not limited to addition, subtraction, multiplication, and more complex functions such as activation functions and gradient calculations, and the like. In an embodiment, in a first broadcast operation of the set of broadcast operations, a first set of bits (e.g., say first 16 MSB bits) of the offloaded data is broadcasted to the computing node. The first broadcast operation involves processing or computations that utilize the higher-order bits of the data, in one embodiment of the present disclosure. In other words, the folded values, which consist of either the first 16 Most Significant Bits (MSB) or a compact representation of them, are broadcasted to the processing units. In an embodiment, in a second broadcast operation of the set of broadcast operations, a second set of bits (e.g., the remaining or last 16 LSB bits) of the offloaded data is broadcasted to the computing node. The second broadcast operation focuses on the lower-order bits, thus completing the computational process with the full set of offloaded data. In other words, this broadcast operation occurs in parallel, where the last 16 LSB are also broadcasted. This is done using the same memory space but without overwriting the MSB, thus allowing both representations to exist simultaneously without conflict. Once the computations are completed, the precision folding process is reversed to restore the full precision of the computed values Below is an exemplary pseudo code for performing the transfer of the offloaded data to the computing node:

Steps for parallel offloading:
1. Determine model state size: Assess the total size of the model states. "Large" often means the data is too big to be processed efficiently as a single block within the available computational resources.
2. Divide model states: Partition the model states into smaller segments that can be offloaded independently. This could be based on the natural structure of the ML model (e.g., per layer) or could be divided into equal-sized blocks.
3. Parallel execution: Assign each data segment to a separate processing unit (like a thread or a processing core). Begin concurrent offloading of each segment. This can be done using parallel computing constructs like threads, async calls, or distributed computing techniques.
4. Synchronization: Implement synchronization mechanisms, such as locks, semaphores, or barriers, and the like as known in the art, to ensure that no two processes write to the same memory location concurrently, thus maintaining data consistency.
5. Merge results: After all segments are offloaded, the reduced precision data is merged/combined into the final offloaded dataset, thus ensuring the correct order and structure are maintained.

Pseudo code for offloading is provided below:

```
 function parallelOffloadModelStates(modelStates, numThreads):
 segments = partitionModelStates(model States, numThreads)
 offloadedData = new ConcurrentDataStructure(numThreads)
 parallel for threadIndex from 0 to numThreads-1:
 segment = segments[threadIndex]
 offloadedSegment = offloadSegment(segment)
 offloadedData[threadIndex] = offloadedSegment
 // Wait for all threads to complete
 synchronizeThreads(numThreads)
 // Merge data from all threads
 finalOffloadedData = mergeOffloadedData(offloadedData)
 return finalOffloadedData
```

In the above example, offloadSegment would be the function that applies the offloading process to each segment, and mergeOffloadedData would be responsible for combining the offloaded data while preserving the original order and structure.

In an embodiment, when a status of the at least the subset of the set of partitioned model states is of a specific type (e.g., say high), the one or more hardware processors 104 perform a parallel offloading. In the parallel offloading, at first, the at least the subset of the set of partitioned model states are partitioned into a set of segments. Then each segment is offloaded to an intended precision state using a multi-threaded approach. Further, upon processing each thread all the offloaded segments are combined. The above step of transferring the offloaded data to the computing node is performed to minimize the transfer size and time, which further ensures that the transfer mechanism is secure and maintains the integrity of the offloaded data.

In other words, if the model states are large, parallel processing is employed by the system 100 to offload data segments concurrently, thus speeding up the overall process. Then, the system 100 uses synchronization mechanisms to ensure data consistency across different threads or processes.

The above steps of transferring the offloaded data to the computing node is better understood by way of below example. Consider the ML model type as Neural Network implementation for complex tasks such as speech recognition, and the like. Data Offloading: The ML model's 32-bit floating-point weights (FP32) are split into two 16-bit parts: (i) the Most Significant Bits (MSB) and (ii) the Least Significant Bits (LSB). Computing Node: A specialized hardware unit like a GPU, optimized for machine learning computations.

Process of Transferring Offloaded Data:
1. Splitting Weights into MSB and LSB:
   i. Original weights in FP32 format are split into MSB16 and LSB16. For instance, a weight '0x12345678' in FP32 might be split into MSB '0x1234' and LSB '0x5678'.
2. Creating Data Packets for LSB:
   i. The LSB16 data is grouped into packets for efficient transfer and computation.
   ii. Each packet contains a fixed number of LSB16 data, e.g., 1024 LSB16 values per packet.
3. Transferring LSB to Computing Node:
   i. LSB16 data packets are sent to the computing node via a high-speed interconnect.
   ii. The transfer process is managed to minimize latency and maximize throughput.

Implementation of Sliding Window Format with LSB:
1. Sliding Window Mechanism for LSB:
   i. In the context of precision folding, a sliding window processes LSB16 data in manageable chunks.
   ii. This is particularly useful in neural network operations that involve large arrays of data.
2. Window Length for LSB Processing:
   i. The length of the sliding window is determined based on the operation. For example, for a convolution operation, the window size might be determined by the filter size, e.g., processing 16 LSB16 values at a time.
3. Processing with Sliding Window:
   i. The computing node performs operations (like convolution, pooling) on the LSB16 data within the sliding window, then shifts the window and repeats the process.
   ii. If overflow occurs in LSB16, the corresponding MSB16 is updated.

Handling MSB Updates Upon Overflow:
1. Overflow Detection:
   a. The system continuously monitors the LSB16 computations for overflow.
   b. Overflow occurs when the LSB16 computation exceeds its 16-bit capacity.
2. Updating MSB16:
   a. Upon detecting an overflow, the corresponding MSB16 is updated to reflect the change.
   b. This ensures the accuracy of the 32-bit weight representation (MSB16 + LSB16) is maintained.

Example Scenario:
1. ML model computation: Suppose the ML model is performing a matrix multiplication operation with its weights.
2. Data Offloading: The weights are split into MSB16 and LSB16. The LSB16 data is transferred to the compute node.
3. **Sliding Window Operation**: The computing node processes the LSB16 data using a sliding window format tailored to the operation's requirements.
4. **Overflow Management**: Concurrently, the system checks for overflow in the LSB16 computations, updating the corresponding MSB16 as needed.

Referring to steps of FIG. 2, at step 214 of the method of the present disclosure, the one or more hardware processors 104 integrate the one or more results into the first precision state based on a mapping of the at least the subset of the set of partitioned model states to the offloaded data to obtain a validated integrated result. More particularly, in the present disclosure, the system 100 and the method integrate the one or more results into/with the first precision state of the one or more weights, and the one or more biases belonging to the state, in an example embodiment. In a scenario, where the one or more weights, and the one or more activation values are offloaded, then the system 100 and the method integrate the associated one or more results into/with the first precision state of the one or more weights, and the one or more activation values belonging to the state. Similarly, in another scenario, where the one or more biases, and the one or more activation values are offloaded, then the system 100 and the method integrate the associated one or more results into/with the first precision state of the one or more biases, and the one or more activation values belonging to the state. In other words, any combination of the model states may be offloaded to the first precision depending upon the requirement and performance of the overall system, and such combination of offloading model states shall not be construed as limiting the scope of the present disclosure. Further, the combination of offloading model states may be based on type of ML model, its previous performance measure, deployment of ML model in specific environment, environment in which the ML model is already deployed for execution and performing required task (e.g., classification, prediction, and the like.), and so on. The step of integrating the one or more results into the first precision state includes initializing a precision numerical array having one or more dimensions expected by the first precision state. Then for each piece of data in the offloaded data, a corresponding position is determined in the first precision state based on a mapping the at least the subset of the set of partitioned model states to the offloaded data. Then the associated piece of data is inserted into the corresponding position using a bit-wise operation to obtain an integrated result. Further, the integrated result is validated/verified to obtain the validated integrated result.

After offloading, the integrity and correctness of the offloaded data is verified by comparing it against the original data using the mapping. Error-checking routines as known in the art are implemented by the system 100 to detect and correct any discrepancies. The details of the offloading process, including the target precision, the mapping, and any errors detected and corrected may be recorded and stored in the database 108. Further, a log is (or may be) maintained for tracking the offloading process over time for debugging and optimization purposes. The compared results are integrated back into the first precision state (e.g., the original precision), wherein the data mapping is utilized to accurately place the computed LSB back into their respective positions within the model states.

The reintegration is a crucial component of the precision offloading system and is designed to reassemble the computed results from their reduced precision format back into the original full precision format as mentioned above to ensure the utility of the computations by reconstituting the data into a form that can be utilized for further processing or analysis. First, the data mapping created during the offloading process is retrieved, which correlates each offloaded LSB with its original position in the full precision data structure. Then the precision numerical array (e.g., an array or tensor) having one or more dimensions expected by the first precision state (e.g., that matches the dimensions of the original full precision model states) is initialized. Then for each piece of computed LSB data, the data mapping is used to determine the correct position in the full precision structure, and the LSB data is inserted into its position, which may involve bit-wise operations if the data is being directly manipulated at the binary level.

Further, if necessary, the system 100 may apply any scaling factors or offsets that were recorded during the offloading process to restore the computed data to its original scale. Furthermore, the system 100 implements a synchronizing technique (as known in the art) to ensure that the reintegration process is thread-safe if it occurs in a parallelized environment. Finally, the integrity of the reintegrated full precision data (or the integrated result) is validated thus making it available for further processing or analysis. The entire integration process may be optimized by the system 100 for speed and memory usage, potentially using just-in-time compilation or other advanced computational techniques, as known in the art. Below is an exemplary pseudo code illustrating the method of integrating the one or more results into the first precision state.

Pseudo code for integrating the one or more results into the first precision state:

```
 // Pseudocode for Reintegration Algorithm
 Function ReintegrateComputedResults(computedLSBData, originalDataMapping,
 seal eFactor):
 // Initialize a data structure to hold the reintegrated full precision results
 fullPrecisionResults = InitializeDataStructure(originalDataMapping. Size)
 // Iterate over the computed LSB data
 for (index, lsb) in computedLSBData:
   // Retrieve the corresponding full precision data index from the mapping
   fullPrecisionIndex = originalDataMapping.GetFullPrecisionIndex(index)
   // Scale the LSB data back to its original range if a scaleFactor is provided
   scaledLSB = lsb
   if scaleFactor is not None:
     scaledLSB *= scaleFactor
   // Reintegrate the LSB data into the full precision results
   InsertIntoFullPrecision(fullPrecisionResults, fullPrecisionIndex, scaledLSB)
 // Return the full precision results after reintegration
 return fullPrecisionResults
 Function InitializeDataStructure(size):
 // Create an appropriately sized data structure for the full precision results
 return new Array(size)
 Function InsertIntoFullPrecision(results, index, data):
 // Insert the data into the results array at the specified index
 results[index] = data
 // Example usage of the ReintegrateComputedResults function
 computedLSBData = GetComputedLSBData() // Retrieve the computed LSB data
 from the processing units
 originalDataMapping = GetOriginalDataMapping() // Retrieve the mapping created
 during offloading
 scaleFactor = GetScaleFactor() // Retrieve the scale factor used during offloading if
 applicable
 fullPrecisionResults = ReintegrateComputedResults(computedLSBData,
 originalDataMapping, scaleFactor)
 
```

GetComputedLSBData, GetOriginalDataMapping, and GetScaleFactor are placeholder functions that would retrieve their respective data from wherever they are stored in the actual implementation. The ReintegrateComputedResults function takes the computed LSB data, the mapping of the LSB data to their original full precision indices, and an optional scale factor that was used during the offloading process. The function then uses these inputs to reconstruct the full precision results.

The step of integrating and the associated pseudo code illustrated above may be better understood by way of description. An example to explain the reintegration using the above pseudocode, particularly focusing on a scenario where 16-bit LSB (Least Significant Bits) data is offloaded from a 32-bit full precision floating-point numbers.
1. Original Full Precision Weights:
   i. It is assumed that there is an array of full precision weights: [0x12345678, 0x87654321, 0xABCDEF01, 0x10FEED10]
   ii. These are 32-bit hexadecimal representations of the weights.
2. Offloaded Computation:
   i. The 16 LSBs of each weight: [0x5678, 0x4321, 0xEF01, 0xED10] is offloaded
   ii. Computations are performed on these 16-bit segments.
3. Computed Results:
   i. After computation, assuming the results are slightly changed: [0x568F, 0x4391, 0xEF55, 0xEDAB]
4. Data Mapping:
   a. A mapping of the position of each 16-bit segment is maintained within the original 32-bit weights.
   b. mapping = [0, 1, 2, 3] // This simple mapping assumes a 1:1 correspondence
5. Scale Factor:
   a. If the computation affects the scale of the data, a scale factor may be incorporated to adjust the results, but for this example, scaling is disregarded for simplicity.
6. Reintegration:
   a. Now these 16-bit results are reintegrated back into the original 32-bit format.
   b. Reintegrated after computation in original 32bit format: [0x1234568F, 0x87654391, 0xABCDEFF5, 0x10FEEDAB]

The system 100 and the method of the present disclosure are implemented to maximize computational efficiency and minimize memory usage by implementing a precision reduction and restoration scheme. More specifically, the system 100 and the method implement a data sharding technique that is configured for partitioning the model states into smaller chunks to facilitate parallel processing and ensure even distribution of computational load and minimizes inter-shard communication. Further, the system 100 performs offloading to coordinate the precision reduction and offloading process according to the offloading technique. The system is further configured to communicate with memory units to transfer the reduced precision data to the computing nodes. Furthermore, the system 100 manages the storage and retrieval of both full precision and reduced precision data, thereby optimizing the memory by implements efficient data structures (e.g., array) for accessing and updating offloaded data. The computing node is implemented to execute the machine learning model computations using the reduced precision data. Each computing node as implemented by the system each node is equipped with a dedicated engine (e.g., partitioning engine/precision folding engine) for handling precision-specific operations. The system and the method of the present disclosure may implement one or more computing nodes for the above aspect. It is to be understood by a person having ordinary skill in the art or person skilled in the art that implementation of a single computing node as described herein for the sake of brevity shall not be construed as limiting the scope of the present disclosure. The dedicated engine is within the computing node and is further designed/configured to perform operations on reduced precision data wherein the computing node is configured to handle the broadcasting of folded and unfolded precision data and the execution of computations on this data.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, a machine learning (ML) model as an input (202), wherein the ML model comprises one or more model states further comprising at least one or more weights, one or more biases, and one or more activation values, and wherein the one or more model states are in a first precision state;
partitioning, via the one or more hardware processors, the one or more model states of the ML model to obtain an optimized set of subgraphs further comprising a set of partitioned model states (204), wherein the optimized set of subgraphs comprising the set of partitioned model states are allocated to a set of processing units;
determining, via the one or more hardware processors, an optimal bit-length for offloading at least a subset of the set of partitioned model states to a target precision based on the set of partitioned model states being allocated to the set of processing units (206);
offloading, via the one or more hardware processors, at least the subset of the set of partitioned model states to the target precision based on the optimal bit-length to obtain an offloaded data (208);
optimizing, via the one or more hardware processors, a memory of the set of processing units for storing the offloaded data by applying a memory management technique on a set of elements in the offloaded data (210);
transferring, via the one or more hardware processors, the stored offloaded data to a computing node operating in a specific window format and performing a set of broadcast operations thereof to obtain one or more results (212); and
integrating, via the one or more hardware processors, the one or more results into the first precision state based on a mapping of at least the subset of the set of partitioned model states to the offloaded data to obtain a validated integrated result (214).

2. The processor implemented method as claimed in claim 1, wherein the step of partitioning the one or more model states comprises:
constructing a dependency graph from the one or more model states, wherein the dependency graph comprises one or more interrelations between the one or more model states, wherein a model state involved in a frequent inter layer communication with another model state within the dependency graph resides in the same subgraph;
segmenting the dependency graph into a set of subgraphs;
allocating the one or more model states to the set of subgraphs, wherein each subgraph comprises 'm' number of model states;
optimizing, via the one or more hardware processors, one or more boundaries of each subgraph based on the one or more model states being allocated to obtain an optimized set of subgraphs; and
allocating the optimized set of subgraphs further comprising at least subset of the set of partitioned model states to the set of processing units.

3. The processor implemented method as claimed in claim 1, wherein the step of determining the optimal bit-length for offloading comprises:
determining an accuracy threshold for a current phase of the ML model;
estimating a sensitivity factor of the ML model;
evaluating performance of the ML model based on a baseline offloading precision;
determining an optimal precision based on the accuracy threshold and the baseline offloading precision; and
determining the optimal bit-length for offloading based on the sensitivity factor and the optimal precision, and
wherein the step of offloading at least the subset of the set of partitioned model states to the target precision comprises:
updating the target precision with the optimal precision;
determining an offloading mask corresponding to the target precision to extract a set of bits;
for each partitioned model state amongst at least the subset of the set of partitioned model states:
retrieving a precision numerical array from the memory of the set of processing units corresponding to the partitioned model state; and
extracting a specific set of bits from each partitioned model state in accordance with the target precision based on the offloading mask being applied on each partitioned model state and storing the specific set of bits in the precision numerical array; and
mapping at least the subset of the set of partitioned model states to the offloaded data by:
indexing at least the subset of the set of partitioned model states to a first order to obtain a first index for each of at least the subset of the set of partitioned model states, wherein the first index serves as a reference for a position of each precision numerical array in at least the subset of the set of partitioned model states;
indexing the offloaded data to obtain a second index; and
mapping the first index to the second index using a lookup table, wherein a key of the lookup table is the first index and an associated precision numerical array is the second index.

4. The processor implemented method as claimed in claim 1, wherein in a first broadcast operation of the set of broadcast operations, a first set of bits of the offloaded data is broadcasted to the computing node, and wherein in a second broadcast operation of the set of broadcast operations, a second set of bits of the offloaded data is broadcasted to the computing node, and
wherein when a status of at least the subset of the set of partitioned model states is of a specific type, the method comprises:
performing a parallel offloading by:
partitioning at least the subset of the set of partitioned model states into a set of segments;
offloading each segment to an intended precision state using a multi-threaded approach; and
combining the offloaded segments upon processing each thread.

5. The processor implemented method as claimed in claim 1, wherein the step of integrating the one or more results into the first precision state comprises:
initializing a precision numerical array having one or more dimensions expected by the first precision state; and
for each piece of data in the offloaded data,
determining a corresponding position in the first precision state based on a mapping at least the subset of the set of partitioned model states to the offloaded data;
inserting an associated piece of data into the corresponding position using a bit-wise operation to obtain an integrated result; and
validating the integrated result to obtain the validated integrated result.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a machine learning (ML) model as an input, wherein the ML model comprises one or more model states further comprising at least one or more weights, one or more biases, and one or more activation values, and wherein the one or more model states are in a first precision state;
partition the one or more model states of the ML model to obtain an optimized set of subgraphs further comprising a set of partitioned model states, wherein the optimized set of subgraphs comprising the set of partitioned model states are allocated to a set of processing units;
determine an optimal bit-length for offloading at least a subset of the set of partitioned model states to a target precision based on the set of partitioned model states being allocated to the set of processing units;
offload at least the subset of the set of partitioned model states to the target precision based on the optimal bit-length to obtain an offloaded data;
optimize a memory of the set of processing units for storing the offloaded data by applying a memory management technique on a set of elements in the offloaded data;
transfer the stored offloaded data to a computing node operating in a specific window format and performing a set of broadcast operations thereof to obtain one or more results; and
integrate the one or more results into the first precision state based on a mapping of at least the subset of the set of partitioned model states to the offloaded data to obtain a validated integrated result.

7. The system as claimed in claim 6, wherein the one or more model states are partitioned by:
constructing a dependency graph from the one or more model states, wherein the dependency graph comprises one or more interrelations between the one or more model states, wherein a model state involved in a frequent inter layer communication with another model state within the dependency graph resides in the same subgraph;
segmenting the dependency graph into a set of subgraphs;
allocating the one or more model states to the set of subgraphs, wherein each subgraph comprises 'm' number of model states;
optimizing, via the one or more hardware processors, one or more boundaries of each subgraph based on the one or more model states being allocated to obtain an optimized set of subgraphs; and
allocating the optimized set of subgraphs further comprising at least subset of the set of partitioned model states to the set of processing units.

8. The system as claimed in claim 6, wherein the optimal bit-length for offloading is determined by:
determining an accuracy threshold for a current phase of the ML model;
estimating a sensitivity factor of the ML model;
evaluating performance of the ML model based on a baseline offloading precision;
determining an optimal precision based on the accuracy threshold and the baseline offloading precision; and
determining the optimal bit-length for offloading based on the sensitivity factor and the optimal precision, and
wherein at least the subset of the set of partitioned model states is offloaded to the target precision by:
updating the target precision with the optimal precision;
determining an offloading mask corresponding to the target precision to extract a set of bits;
for each partitioned model state amongst at least the subset of the set of partitioned model states:
retrieving a precision numerical array from the memory of the set of processing units corresponding to the partitioned model state; and
extracting a specific set of bits from each partitioned model state in accordance with the target precision based on the offloading mask being applied on each partitioned model state and storing the specific set of bits in the precision numerical array; and
mapping at least the subset of the set of partitioned model states to the offloaded data by:
indexing at least the subset of the set of partitioned model states to a first order to obtain a first index for each of at least the subset of the set of partitioned model states, wherein the first index serves as a reference for a position of each precision numerical array in at least the subset of the set of partitioned model states;
indexing the offloaded data to obtain a second index; and
mapping the first index to the second index using a lookup table,
wherein a key of the lookup table is the first index and an associated precision numerical array is the second index.

9. The system as claimed in claim 6, wherein in a first broadcast operation of the set of broadcast operations, a first set of bits of the offloaded data is broadcasted to the computing node, and wherein in a second broadcast operation of the set of broadcast operations, a second set of bits of the offloaded data is broadcasted to the computing node, and
wherein when a status of at least the subset of the set of partitioned model states is of a specific type, the one or more hardware processors are further configured by the instructions to:
performing a parallel offloading by:
partitioning at least the subset of the set of partitioned model states into a set of segments;
offloading each segment to an intended precision state using a multi-threaded approach; and
combining the offloaded segments upon processing each thread.

10. The system as claimed in claim 6, wherein the one or more results integrated into the first precision state by:
initializing a precision numerical array having one or more dimensions expected by the first precision state; and
for each piece of data in the offloaded data,
determining a corresponding position in the first precision state based on a mapping at least the subset of the set of partitioned model states to the offloaded data;
inserting an associated piece of data into the corresponding position using a bit-wise operation to obtain an integrated result; and
validating the integrated result to obtain the validated integrated result.

11. One or more non-transitory machine-readable information storage mediums comprising one or more instructions which when executed by one or more hardware processors cause:
receiving, a machine learning (ML) model as an input, wherein the ML model comprises one or more model states further comprising at least one or more weights, one or more biases, and one or more activation values, and wherein the one or more model states are in a first precision state;
partitioning the one or more model states of the ML model to obtain an optimized set of subgraphs further comprising a set of partitioned model states, wherein the optimized set of subgraphs comprising the set of partitioned model states are allocated to a set of processing units;
determining an optimal bit-length for offloading at least a subset of the set of partitioned model states to a target precision based on the set of partitioned model states being allocated to the set of processing units;
offloading at least the subset of the set of partitioned model states to the target precision based on the optimal bit-length to obtain an offloaded data;
optimizing a memory of the set of processing units for storing the offloaded data by applying a memory management technique on a set of elements in the offloaded data;
transferring the stored offloaded data to a computing node operating in a specific window format and performing a set of broadcast operations thereof to obtain one or more results; and
integrating the one or more results into the first precision state based on a mapping of at least the subset of the set of partitioned model states to the offloaded data to obtain a validated integrated result.

12. The one or more non-transitory machine-readable information storage mediums as claimed in claim 11, wherein the step of partitioning the one or more model states comprises:
constructing a dependency graph from the one or more model states, wherein the dependency graph comprises one or more interrelations between the one or more model states, wherein a model state involved in a frequent inter layer communication with another model state within the dependency graph resides in the same subgraph;
segmenting the dependency graph into a set of subgraphs;
allocating the one or more model states to the set of subgraphs, wherein each subgraph comprises 'm' number of model states;
optimizing, via the one or more hardware processors, one or more boundaries of each subgraph based on the one or more model states being allocated to obtain an optimized set of subgraphs; and
allocating the optimized set of subgraphs further comprising at least subset of the set of partitioned model states to the set of processing units.

13. The one or more non-transitory machine-readable information storage mediums as claimed in claim 11, wherein the step of determining the optimal bit-length for offloading comprises:
determining an accuracy threshold for a current phase of the ML model;
estimating a sensitivity factor of the ML model;
evaluating performance of the ML model based on a baseline offloading precision;
determining an optimal precision based on the accuracy threshold and the baseline offloading precision; and
determining the optimal bit-length for offloading based on the sensitivity factor and the optimal precision, and
wherein the step of offloading at least the subset of the set of partitioned model states to the target precision comprises:
updating the target precision with the optimal precision;
determining an offloading mask corresponding to the target precision to extract a set of bits;
for each partitioned model state amongst at least the subset of the set of partitioned model states:
retrieving a precision numerical array from the memory of the set of processing units corresponding to the partitioned model state; and
extracting a specific set of bits from each partitioned model state in accordance with the target precision based on the offloading mask being applied on each partitioned model state and storing the specific set of bits in the precision numerical array; and
mapping at least the subset of the set of partitioned model states to the offloaded data by:
indexing at least the subset of the set of partitioned model states to a first order to obtain a first index for each of at least the subset of the set of partitioned model states, wherein the first index serves as a reference for a position of each precision numerical array in at least the subset of the set of partitioned model states;
indexing the offloaded data to obtain a second index; and
mapping the first index to the second index using a lookup table, wherein a key of the lookup table is the first index and an associated precision numerical array is the second index.

14. The one or more non-transitory machine-readable information storage mediums as claimed in claim 11, wherein in a first broadcast operation of the set of broadcast operations, a first set of bits of the offloaded data is broadcasted to the computing node, and wherein in a second broadcast operation of the set of broadcast operations, a second set of bits of the offloaded data is broadcasted to the computing node, and
wherein when a status of at least the subset of the set of partitioned model states is of a specific type, the method comprises:
performing a parallel offloading by:
partitioning at least the subset of the set of partitioned model states into a set of segments;
offloading each segment to an intended precision state using a multi-threaded approach; and
combining the offloaded segments upon processing each thread.

15. The one or more non-transitory machine-readable information storage mediums as claimed in claim 11, wherein the step of integrating the one or more results into the first precision state comprises:
initializing a precision numerical array having one or more dimensions expected by the first precision state:
for each piece of data in the offloaded data,
determining a corresponding position in the first precision state based on a mapping at least the subset of the set of partitioned model states to the offloaded data;
inserting an associated piece of data into the corresponding position using a bit-wise operation to obtain an integrated result; and
validating the integrated result to obtain the validated integrated result.
